(19) **Europäisches Patentamt**

**European Patent Office**

**Office européen des brevets**

(11) **EP 1 134 427 B1**

(12) **EUROPEAN PATENT SPECIFICATION**

(45) Date of publication and mention
of the grant of the patent:
**22.09.2004  Bulletin 2004/39**

(51) Int Cl.[7]: **F04D 29/42**, F04D 27/02,
F04D 29/54, F01D 11/08

(21) Application number: **00105734.8**

(22) Date of filing: **17.03.2000**

(54) **Turbo machines**

TURBOMASCHINEN

Turbo machines

(84) Designated Contracting States:
**DE FR GB**

(43) Date of publication of application:
**19.09.2001  Bulletin 2001/38**

(73) Proprietors:
  • **Hitachi, Ltd.**
    **Chiyoda-ku, Tokyo 101-8010 (JP)**
  • **Kurokawa, Junichi**
    **Yokohama-shi, Kanagawa-ken (JP)**

(72) Inventors:
  • **Irie, Kouichi, c/o Hitachi, Ltd. Int. Prop. Group**
    **Chiyuda-ku, Tokyo 100-8220 (JP)**
  • **Okamura,Tomoyoshi,**
    **c/o Hitachi,Ltd. Int. Prop. Gp.**
    **Chiyuda-ku, Tokyo 100-8220 (JP)**

  • **Manabe, Akira, c/o Hitachi, Ltd. Int. Prop. Group**
    **Chiyuda-ku, Tokyo 100-8220 (JP)**
  • **Kurokawa, Junichi**
    **Yokohama-shi, Kanagawa-ken (JP)**

(74) Representative: **Hano, Christian, Dipl.-Ing. et al**
    **v. Füner Ebbinghaus Finck Hano**
    **Mariahilfplatz 2 & 3**
    **81541 München (DE)**

(56) References cited:
**EP-A- 0 229 519**      **WO-A-95/10692**
**GB-A- 2 202 585**      **GB-A- 2 285 485**
**US-A- 3 893 787**      **US-A- 4 086 022**
**US-A- 4 466 772**      **US-A- 5 277 541**
**US-A- 5 762 470**

## Description

## 1. FIELD OF THE INVENTION

The present invention relates to turbo machines, and in particular relates to a turbo machine being able to prevent from instability in flow, by suppressing swirl due to recirculation flow at an inlet of an impeller and by suppressing rotation stalls of the impeller, irrespective of the types and the fluid thereof.

In more details, the present invention relates to the turbo machines, such as for a pump, a compressor, a blower, etc., having non-volume type impeller therein, and in particular, relates to the turbo machine being able to prevent from the instability in flow, by suppressing a swirl or pre-whirl which is generated due to a main flow or component of the recirculation occurring at an inlet of an impeller and by suppressing rotation stalls thereof, thereby being suitable to be applied into a mixed-flow pump, which is used widely as water circulating pumps in a thermal power plant or in a nuclear power plant, or as drainage pumps, etc.

## 2. DESCRIPTION OF PRIOR ART

Rotary machines being called by a name of "turbo machine" can be classified as below, depending upon the fluids by which the machines are operated and in types thereof.

1. With fluids by which the machine is operated:

Liquid, and Gas.

2. In Types:

An axial flow type, a mixed-flow type, and a centrifugal type.

Now, a mixed-flow pump is used mainly or widely due to easiness in operation thereof, and it comprises a suction casing, a pump and a diffuser, in a sequence from upper stream to down stream thereof.

A blade (of an impeller) rotating within a casing of the pump is rotationally driven on a rotary shaft, thereby supplying energy to the liquid which is suctioned from the suction casing. The diffuser has a function of converting a portion of velocity (or kinetic) energy of the liquid into static pressure.

A typical characteristic curve between a head and a flow rate of the turbo machine including the mixed-flow pump, where the horizontal axis shows a parameter indicating the flow rate while the vertical axis a parameter indicating the head, is as follows. Namely, it is common that the head falls down in the reverse relation to an increase of the flow rate in a region of low flow rate, however it has a characteristic of uprising at the right-hand side following the increase of the flow rate, during the time when the flow rate lies within a certain specific region. However, when the flow rate rises up further exceeding over the right-hand uprising region of the characteristic curve, the head begins to fall down, again, following the increase in the flow rate.

In a case where the turbo machine is operated with the flow rate of such the characteristic curve of uprising at the right-hand side, a mass of the liquid vibrates by itself, i.e., generating a surging phenomenon. It is believed that such the characteristic curve of uprising at the right-hand side is caused by, though the recirculation comes out at an outer edge of the inlet of the impeller when the flow rate flowing through the turbo machine is low, since at that instance, a flow passage or a channel for the liquid flowing into the impeller is narrowed and thereby generating a swirl in the liquid flowing into the impeller due to the influence of the recirculation mentioned above.

Since the surging gives damages not only upon the turbo machine, but also upon conduits or pipes which are connected to an upper-stream side and a down-stream side thereof, ordinarily, it is inhibited to be practiced in a region of low flow rate. Further, there were already proposed the following methods for suppressing the surging, other than an improvement made in the shape (i.e., profile) of the blade, for the purpose of expanding or enlarging the operation region of the turbo machine.

1. Casing treatment:

Thin or narrow grooves or drains, being from 10% to 20% of a chordal length of the blade, are formed in a casing region where the impeller lies, so as to improve a stall margin. Namely, with the casing treatments which were already proposed, grooves being sufficient in the depth are formed in an inner wall (i.e., flow surface) of the casing in the region where the blades lie, in an axial direction, in a peripheral direction, or in an oblique direction, alternatively, in a radial direction or an oblique direction, respectively.

2. Separator:

A separator is provided for dividing the recirculation flow occurring at the outer edge of the inlet of the impeller into a reverse flow portion and a forward flow portion (i.e., in a main flow direction), in the region of low flow rate, thereby prohibiting the expansion of the recirculation.

As an example of a separator which is applied into the turbo machine of the axial flow type, in particular, there are proposed a suction ring type, a blade separator type, and an air separator type.

In the suction ring type, the reverse flow is enclosed within an outside of the suction ring, and in the blade separator type is provided a fin between the casing and the ring. Further, with the air separator type, a front end or a tip of the moving wing (i.e., the blade) is opened so as to introduce the reverse flows into the outside of the casing, thereby prohibiting the swirl from being generated due to the reverse flows by means of the fin. Thus, it is more effective, comparing with the former two types mentioned above, however, it comes to be large-scaled in the devices thereof.

3. Active control:

This is to suppress the generation of the swirl due to the recirculation by injecting or spouting out the high pressure fluid from an outside into a spot where the recirculation occurs.

Furthermore, as an example of the conventional turbo machines, a mixed-flow pump will be described hereinafter. To a mixed-flow pump, it is required to show a head-flow rate characteristic curve (hereinafter, called by "head curve") having no behavior uprising at the right-hand side for enabling a stable operation, in a case where the pump is operated over the whole flow range thereof. However, ordinarily in a pump, it is common that the characteristics, such as an efficiency representing performance of the pump, a stability of the head curve, a cavitation performance, and an axial motive power for closure, etc., are in reversed relationships to one another. Namely, if trying to improve one of those characteristics, the other one(s) is is decreased down, therefore there is a problem that it is difficult to obtain improvements in at least two or more characteristics at the same time. For example, with a pump in which consideration was made primarily onto the efficiency thereof, the head curve shows a remarkable behavior uprising at the right-hand side in a portion thereof, thereby it has a tendency to be unstable.

For obtaining a head curve continuously falling down at the right-hand side for enabling the stable operation, in the conventional arts, as is mentioned in the above, it is already known that the casing treatment or the separator is provided or treated therein. Such the structure is already described, for example in U.S. Patent No. 4,212,585.

Also, a turbo machine is proposed, in which a plurality of grooves are formed on the flow surface of the casing for connecting an inlet side of the impeller and an area or region of the flow surface of the casing where the blades are arranged, thereby obtaining a head curve not having the characteristic of uprising at the right-hand side while suppressing the recirculation in the inlet thereof.

However, in accordance with the casing treatment and the separators of the prior arts mentioned above, although it is possible to shift the characteristic curve between head and flow rate including the portion uprising at the right-hand side into the lower flow rate side, so as to expand the stable operation region thereof, it is impossible to remove or cancel such the characteristic or behavior uprising at the right-hand side. Further, the turbo machine is decreased by approximately 1 % in the efficiency thereof, every time it rises up by 10 % in the stall margin, in accordance with the casing treatment.

Also, in such the active control, since there is a necessity to obtain the high pressure fluid from the turbo machine itself or an outside thereof, the efficiency of the turbo machine is decreased.

Further, with a turbo machine like the turbo machine disclosed in U.S. Patent No. 4,212,585, in which the grooves are formed for connecting the inlet side of the impeller and the flow surface of the casing where the blades thereof are arranged, the processing of the grooves is easy and has a decreased efficiency, and it is also possible to obtain the head curve without an uprising at the right-hand side in the characteristic thereof. However, there the possibility is not taken into consideration that a pressure fluctuation is generated due to interference between the flow from the blades of the impeller and the grooves when the blades pass by the plural grooves formed on the flow surface of the casing, thereby increasing vibration and noises.

GB-A-2 285 485 describes a turbo machine comprising a casing, an impeller having a plurality of blades and being positioned within said casing, and an annular recess formed on the inner flow surface of said casing for communicating between an inlet side of said impeller and an area of the inner flow surface of said casing where the blades of said impeller are arranged to provide an alternative path for flow in the reverse direction. In the recess a plurality of vanes are arranged, the vanes having a curvature about an axis generally parallel to the casing axis to deflect air entering the recess inlet after travelling generally circumferentially in the region of the blade tips radially outwardly.

In US-A-5 762 470 a turbo machine is disclosed comprising a casing, an impeller having a plurality of blades and being positioned within said casing, and an annular cavity being formed on the inner flow surface of said casing The annular cavity communicates with the flow path through slots formed by an annular grid of ribs. The slots provide communication between the cavity and the flow path both upstream of and axially coincident with the array of the blades.

## SUMMARY OF THE INVENTION

An object, in accordance with the present invention, is to provide a turbo machine having a head-flow rate characteristic uprising at the right-hand side thereof, having a high efficiency and generating low vibrations and noises.

This object is obtained by a turbo machine comprising the features of claim 1. Preferred embodiments of the turbo machine according to the invention are claimed in claims 2 to 15

According to the present invention, by the at least one second groove the fluctuation in pressure, being caused due to the interference between the grooves and the flow from the impeller when the impeller blades pass by the grooves in the direction of gradient in pressure, is reduced or mitigated. Hence, the generation of vibrations and/or noises caused by a fluctuation in pressure are reduced.

Further, when the grooves running in the direction of gradient in pressure (i.e., the first grooves) are inclined in the direction of rotation of said impeller (i.e., are wound in a direction reverse to curving of the impeller blades), it is also possible to reduce or mitigate the interference between the flow from the impeller and the grooves.

Further, the same effect can be obtained by forming the first grooves in the direction of gradient in pressure up to the inlet of the impeller, but constructing them not to overlap the second grooves in the circumferential direction, so that the grooves in the circumferential direction and the grooves in the direction of gradient in pressure are communicated with each other, thereby taking out the fluid of pressure for suppressing a generation of the recirculation within the main flow at the inlet of the impeller.

Those two kinds of grooves mentioned above are preferable connected by flow passages which are formed on the outer periphery of the casing extending from the inner flow surface thereof where the main flow flows through. In this manner, it is possible to avoid grooves in the direction of gradient in pressure within the area on the inner flow surface of the casing where the impeller blades are arranged. Therefore the interference between the flow from the impeller and the grooves can be reduced or mitigated. The flow passages for connecting the first grooves and the second grooves are preferably formed on the lines elongating from the first grooves, so that the fluid flowing in the direction reverse to the main flow flows into the inlet side of the impeller blades.

Other features, objects and/or advantages obtained according to the present invention, will be apparent from the following explanation which will be made by referring to accompanying drawings.

**BRIEF DESCRIPTION OF THE DRAWINGS**

Fig. 1 is a meridian plane view of a principle portion of a mixed-flow pump, according to a first embodiment of the present invention;

Fig. 2 shows a graph illustrating a head-flow rate characteristic curve of a turbo machine and an efficiency-flow rate characteristic curve, respectively;

Fig. 3 shows a graph illustrating a relationship between a flow rate and an acceleration of vibration of a turbo machine;

Fig. 4 shows a graph illustrating a relationship between a flow rate and a noise level of vibration of a turbo machine;

Fig. 5 is a meridian plane view of a principle portion of a turbo machine illustrating a variation of the embodiment shown in the Fig. 1, according to the present invention;

Fig. 6 is an extended view of an inner flow surface of a casing shown in Fig. 1;

Fig. 7 is an extended view of an inner flow surface of a casing illustrating a variation of an example shown in Fig. 6;

Fig. 8 is an extended view of an inner flow surface of a casing illustrating another variation of the example shown in Fig. 6;

Fig. 9 is an extended view of an inner flow surface of a casing illustrating a second embodiment according to the present invention;

Figs. 10 (a) and (b) show a third embodiment according to the present invention, in particular, Fig. 10 (a) shows an extended view of an inner flow surface of a casing, and Fig. 10 (b) shows a A-A cross-section view (a meridian plane view) of Fig. 10 (a);

Figs. 11 (a) to (c) show a concrete example for achieving the structure of the third embodiment according to the present invention, in particular, Fig. 11 (a) shows an extended view of an inner flow surface of a casing, Fig. 11 (b) shows a A-A cross-section view (a meridian plane view) of Fig. 11 (a), and Fig. 11 (c) shows a B-B cross-section view (a meridian plane view) of Fig. 11 (a);

Fig. 12 is a meridian plane view of a principle portion of a turbo machine illustrating a variation of the embodiment shown in Figs. 10(a) and (b);

Figs. 13 (a) and (b) are views illustrating another variation of the embodiment shown in Figs. 10(a) and (b), in particular, Fig. 13 (a) shows an extended view of an inner flow surface of a casing, and Fig. 13 (b) shows a A-A cross-section view (a meridian plane view) of Fig. 13 (a);

Fig. 14 is a meridian plane view of a principle portion of an embodiment, wherein the first embodiment according to the present invention shown in Fig. 1 is applied into a turbo machine using a closed-type impeller having a shroud thereabouts;

Fig. 15 shows the cross-section XIII-XIII of Fig. 15; and

Figs. 16(a) to (d) show various examples of cross-section shapes of grooves formed on the inner flow surface of the casing.

## DESCRIPTION OF PREFERRED EMBODIMENTS

Hereinafter, embodiments according to the present invention will be fully explained by referring to the attached drawings.

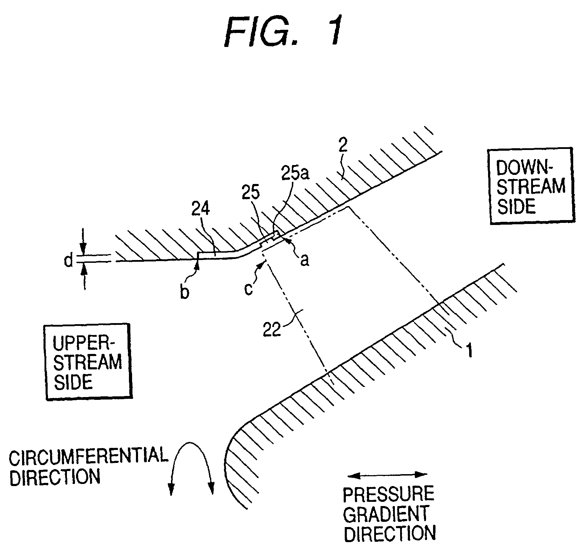

Fig. 1 shows a first embodiment of the present invention. The figure is an enlarged cross-section view of a portion of an impeller portion of a mixed-flow pump, representing one of the turbo machines, wherein reference numeral 1 indicates an impeller of an open type, having open blades therewith. For suppressing a generation of a recirculation due to a reserve flow from the blades of the impeller, a large number of shallow grooves (i.e., first grooves) 24 running in a direction of pressure gradient of fluid are formed on an inner flow surface of a casing 2 around an outer circumference thereof, in the vicinity of an inlet portion of the blades 22 of the impeller. A terminal position a of these grooves at a down-stream side of the turbo machine lies in an area where the impeller blades are arranged, thereby conducting a portion of a fluid compressed by the impeller to the position b where the recirculation is generated when the flow rate is low at an upper-stream side of the turbo machine through this groove 24. By this, since the compressed fluid at the down-stream side is spouted out in a position where the recirculation is easily generated, it is possible to suppress the generation of the recirculation, and to prevent the main flow at an inlet of the turbo machine from turning into the swirl due to an influence of the recirculation, thereby achieving a turbo machine having a high performance, avoiding a generation of stall of rotation of the impeller blades.

Further, according to the present embodiment, a plurality of second grooves 25 are formed on the inner flow surface of the casing as well, for making the plurality of first grooves 24 formed over the inner circumference thereof continuous, at a portion thereof corresponding to the area where the impeller blades are arranged. In a case where no such second groove is formed, it is acknowledged that a flow from the impeller 1 interferes with the first grooves 24 formed in an axial direction (i. e., in the pressure gradient direction of fluid), thereby generating a fluctuation in pressure. The pressure fluctuation vibrates the turbo machine, and increases vibration and noises. According to the present embodiment, since the second grooves 25 running in the circumferential direction of the casing are formed within the area where the impeller blades are arranged, the difference in pressure between the plurality of first grooves 24, which are formed over the inner circumference thereof, is mitigated within the second grooves 25. Therefore it is possible to reduce the fluctuation in pressure which is caused by the first grooves 24 and the blades 22, i. e., to suppress the increase of vibration and noises due to the fluctuation in pressure.

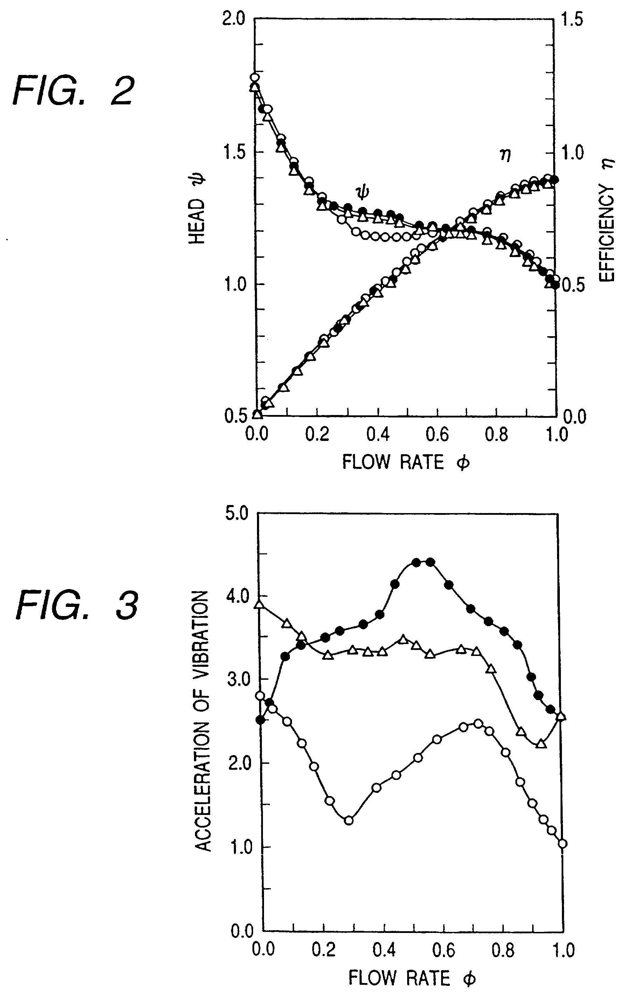

Fig. 2 shows a graph illustrating a head-flow rate characteristic curve of a turbo machine and an efficiency-flow rate characteristic curve thereof, wherein the horizontal axis indicates a flow rate without dimension while the vertical axis a head without dimension. In the figure, white circles indicate the head-flow rate characteristic curve and the efficiency-flow rate characteristic curve of a turbo machine, in which no first grooves 24 are formed on the inner flow surface around the casing. Black circles indicate the head-flow rate characteristic curve and the efficiency-flow rate characteristic curve of a turbo machine, in which the first grooves 24 are formed. White triangles indicate the head-flow rate characteristic curve and the efficiency-flow rate characteristic curve of a turbo machine, in which the first grooves 24 are formed and also the second grooves 25 are formed in the vicinity of the terminal position a of the grooves 24 at the down-stream side of the turbo machine.

As is apparent from Fig. 2, in the case of those white circles, within a region from 0.5 to 0.6 in the non-dimensional flow rate, there is a characteristic of uprising at the right-hand side wherein the head increases following the increase of the flow rate. In the case of black circles, the characteristic of uprising at the right-hand side is eliminated. In the case of the white triangles, according to the present embodiment, an effect being same to that of the black circles is confirmed.

Fig. 3 shows a relationship between the flow rate and an acceleration of vibration in the turbo machine, wherein the white circles, the black circles and the white triangles indicate data on the turbo machine being same to that shown in Fig. 2, respectively. In the figure, the horizontal axis indicates the flow rate without dimension, while the vertical axis the acceleration of vibration without dimension. As is apparent from this Fig. 3, comparing to that of the white circles, the vibration acceleration shows a peak in the vicinity of 0.5 - 0.6 of the non-dimensional flow rate in a case of the black circles where the first grooves are formed, and comparing to the case of the white circles, the vibration is increased up over a whole range thereof. On the contrary to this, in the case of the white triangles where the first and the second grooves are formed, it is apparent the vibration acceleration is improved greatly, comparing to that of the black circles, and that the acceleration of vibration shows no such peak in the vicinity of 0.5 - 0.6 of the non-dimensional flow rate. Thereby the vibration is also improved greatly.

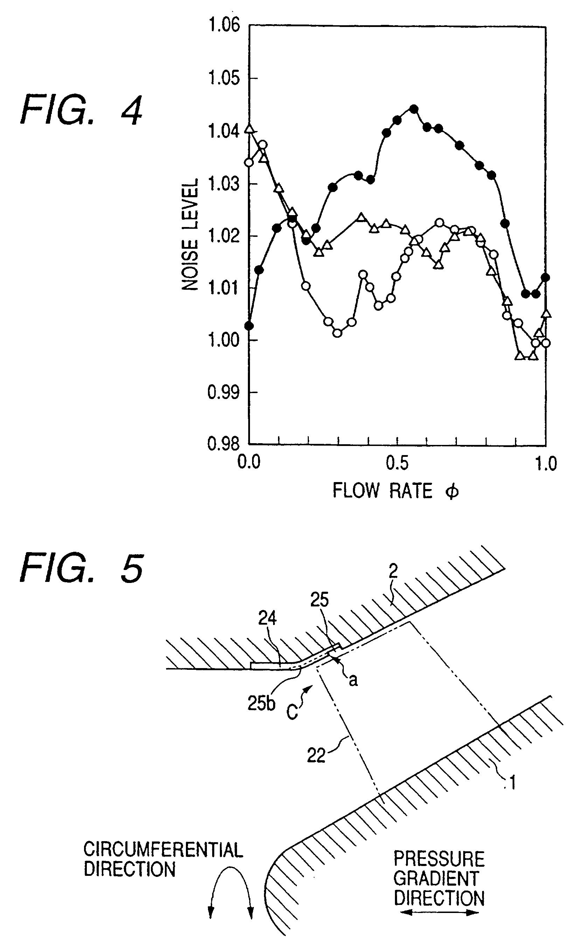

Fig. 4 shows a relationship between the flow rate and a noise level in the turbo machine, wherein the white circles, the black circles and the white triangles indicate data on the turbo machine being same to that shown in Fig. 2, respectively. In the figure, the horizontal axis indicates the flow rate without dimension thereof, while the vertical axis the noise level without dimension thereof. As is apparent from this Fig. 4, comparing to that of the white circles, the noise level is increased up in the case of the black circles. On the contrary to the case where only the first grooves are formed, it is apparent that the noise level is greatly reduced, down to around a degree being same to the case (of the white circles) where no such groove is formed in the casing, within a range of the flow rate of showing a high efficiency as a main operation range of the pump, in the case of the white triangles (according to the present embodiment) where the first and the second grooves are formed.

However, in the embodiment shown in Fig. 1, the second grooves 25 running in the circumferential direction are formed at a depth being shallower than the depth d of the first grooves 24 running in the pressure gradient direction, and are communicating all or several of the plurality of first grooves which are formed over the inner circumference of the casing.

Further, the depth of those second grooves 25 running in the circumferential direction may be equal to the depth d of the first grooves 24 running in the pressure gradient direction, and further the depth may be made larger than the depth d of the first grooves.

Although the second grooves 24 running in the circumferential direction extend from the vicinity of the front edges C of the impeller blades 22 to a position located at the upper-stream side close to the terminal position a of the grooves directing to the down-stream side of the turbo machine, in the example shown in Fig. 1, the second grooves may extend from the vicinity of the front edges C of the impeller blades 22 to the terminal position a of the grooves directing to the down-stream side of the turbo machine (see a dotted line 25a). Further, as shown in Fig. 5, the second grooves 25 may extend from the terminal position a of the grooves to an area located a little bit upstream from where the impeller blades are arranged, or they may extend from the terminal position a of the grooves to a position at the upper-stream side of the turbo machine upstream of the front edges C of the blades 22.

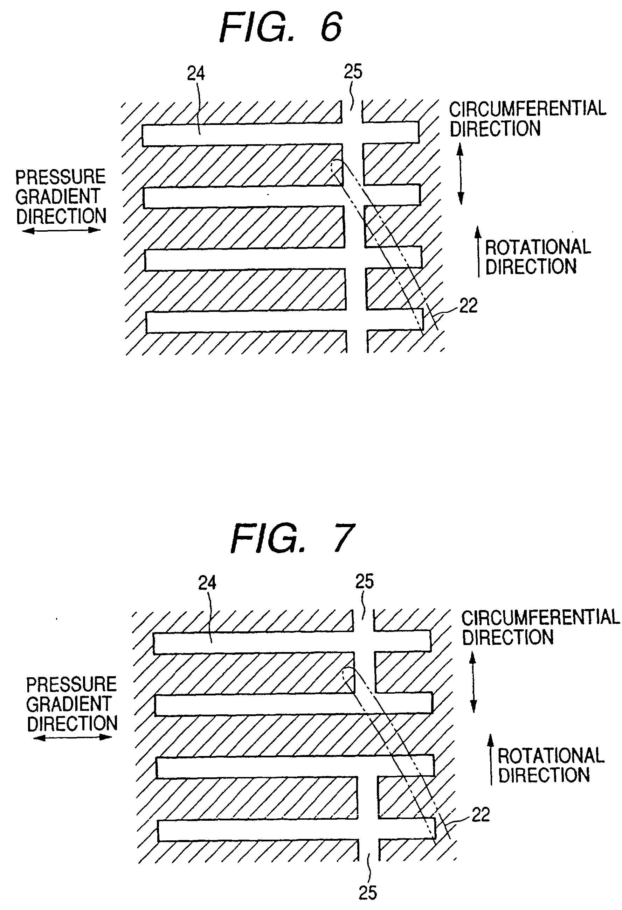

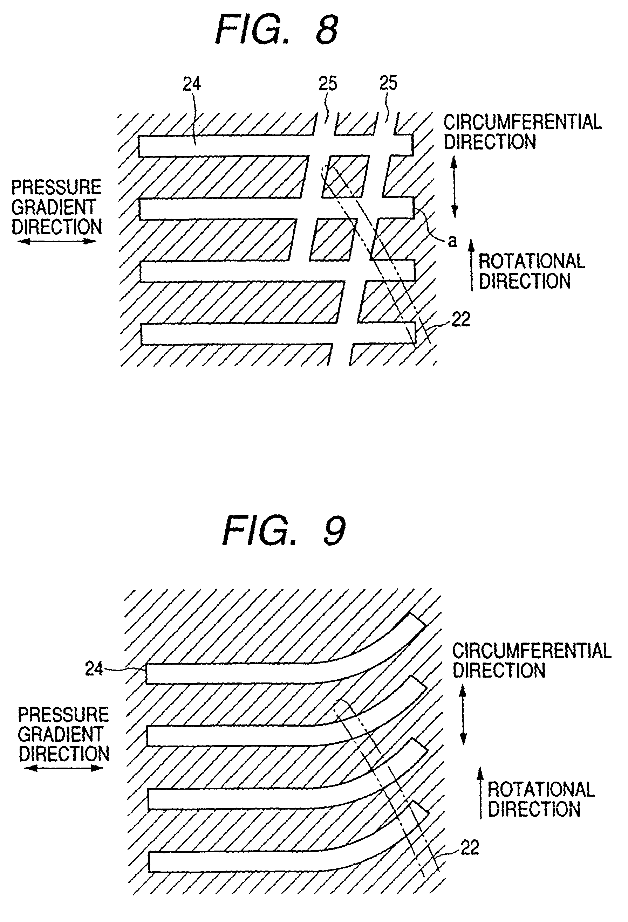

Fig. 6 shows an extended view of the inner flow surface of the casing shown in Fig. 1, and as is shown in this figure, the second grooves 25 running in the circumferential direction of the casing are communicating all of the plurality of the first grooves 24 running in the pressure gradient direction, which are formed over the inner circumference of the casing in the circumferential direction thereof. The second grooves 25 running in the circumferential direction of the casing may be formed in the circumferential direction intermittently, as shown in Fig. 7, in a number of pieces, in such a manner that the large number of the first grooves running in the pressure gradient direction which are formed over the inner circumference thereof are communicated (or connected) by a several number thereof. Further, as is shown in Fig. 8, the second grooves 25 running in the circumferential direction may be formed in a spiral shape extending from the vicinity of the inlet portion of the impeller blades to the terminal position a of the first grooves 24, so that the first grooves 24 running in the pressure gradient direction are communicated with each other in the circumferential direction of the casing.

Next, explanation will be given of a second embodiment according to the present invention, by referring to Fig. 9.

Also in the second embodiment, like in the first embodiment mentioned above, the plurality of grooves 24 running in the pressure gradient direction (i.e., the axial direction) are formed for communicating the inlet side of the impeller blades and the area on the inner flow surface of the casing. In this embodiment, a portion of the grooves 24 corresponding to the above-mentioned area where the impeller blades are arranged (i.e., the down-stream side of the blades) is inclined (or wound) in the direction of rotation of the impeller. With such the structure, the interference between the impeller blades 22 and the grooves 24 is made slow or loose, Thereby it is possible to reduce generation of the fluctuation in pressure, and also to avoid an increase of the vibration and noises. Further, at the upper-stream side of the impeller blades the grooves 24 are formed in an axial direction of the casing, and the fluid flows back to the inlet side of the impeller blades through those grooves 24 when the pressure is increased by the blades, so as to be spouted out at the position where the recirculation occurs when the flow rate is low. Therefore it is possible to suppress the circulation and/or the stall of rotation of the impeller blades caused due to the recirculation, thereby to eliminate or reduce the characteristic of uprising at the right-hand side in the head-flow rate characteristic curve of the turbo machine.

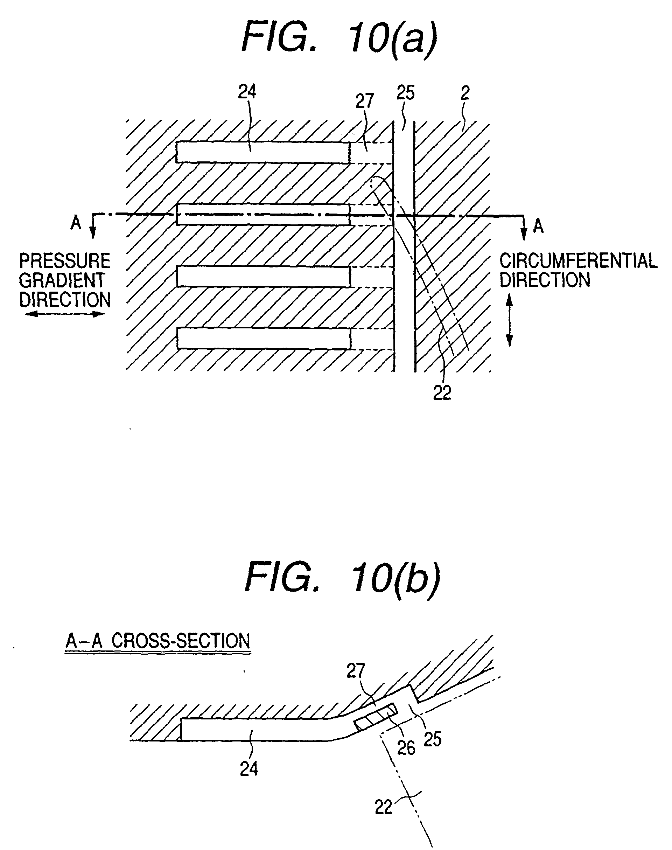

Figs. 10 (a) and (b) show views of a third embodiment according to the present invention. Fig. 10 (a) shows an extended view of the inner flow surface of the casing, and Fig. 10 (b) an A-A cross-section view on a meridian plane in Fig. 10 (a).

On the inner flow surface of the casing 2, a plurality of first grooves 24 are formed over the inner circumference thereof, directing in the axial direction (i.e., in the pressure gradient direction) for connecting the inlet side of the impeller and the area where the impeller is arranged. On the inner flow surface of the casing where the impeller is arranged second grooves 25 are formed continuously in the circumferential direction in a part thereof. Further, flow passages 27 are formed bypassing the inner flow surface of the casing in such a manner that the above-mentioned first grooves 24 and the second grooves 25 are communicated with each other. The flow passages 27 are located or aligned on a line extending from the grooves 24, Therefore a portion of the fluid compressed by the impeller blades flows through the second grooves 25 and the flow passages 27 into the first grooves 24, so as to be spouted out at the position where the recirculation occurs at the inlet side of impeller blades. Thereby, in the same manner as in the embodiments mentioned above, it is possible to eliminate the characteristic of uprising at the right-hand side in the head-flow rate characteristic curve of the turbo machine.

Also, no such grooves are formed in the axial direction on the inner flow surface of the casing, where the impeller is arranged. Therefore there occurs no interference in the flow when the blades pass by the first grooves, and further the difference in pressure is made small between the plurality of the first grooves 24 via the second grooves 25, thereby enabling to suppress the increase of the vibration and noises due to the fluctuation in pressure.

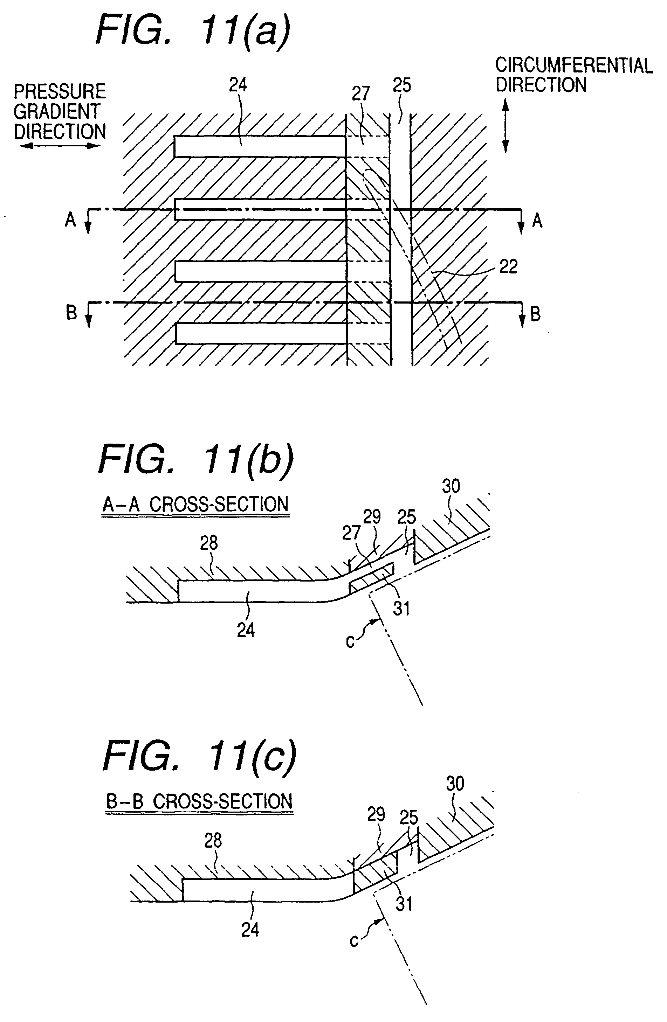

An example for realizing such a structure of the third embodiment mentioned above will be explained, by referring to Figs. 11 (a) to (c). Fig. 11 (a) shows an extended view of the inner flow surface of the casing, Fig. 11 (b) an A-A cross-section view (i.e., a cross-section view on a meridian plane) in Fig. 11 (a), and Fig. 11 (c) a B-B cross-section view (i.e., a cross-section view on the meridian plane) in Fig. 11 (a).

The casing is divided in the axial direction into three portions as indicated by reference numerals 28, 29 and 30. (Here, it does not matter whether the portions 28 and 29 of the casing are formed as one part or in a body, or alternatively if the portions 29 and 30 of the casing are formed as one part or in a body.) On the inner flow surface of a casing 28, a plural number of the second grooves 24 directing into the axial direction (i.e., the pressure gradient direction) are formed over the inner circumference thereof, connecting from the inlet side of the impeller blades until the front edge c thereof. Also, at an inner periphery side of the casing portion 29 is inserted a circular or ring-like member (i.e., a casing) 31, thereby forming the second grooves 25 in a direction of circumference between an end surface of this circular member at the down-stream side of the turbo machine and an end surface of the casing 30. Also, on a reverse side surface of the circular member 31 mentioned above, flow passages 27 are formed in such a manner that the first and the second grooves 24 and 25 are communicated with each other. As shown in the Fig. 11 (c), by connecting the inner flow surface of the casing 29 to an outer peripheral surface of a portion of the circular member 31 which does not form the grooves therewith, it is possible to fix the circular member 31 onto the inner flow surface of the casing member 29.

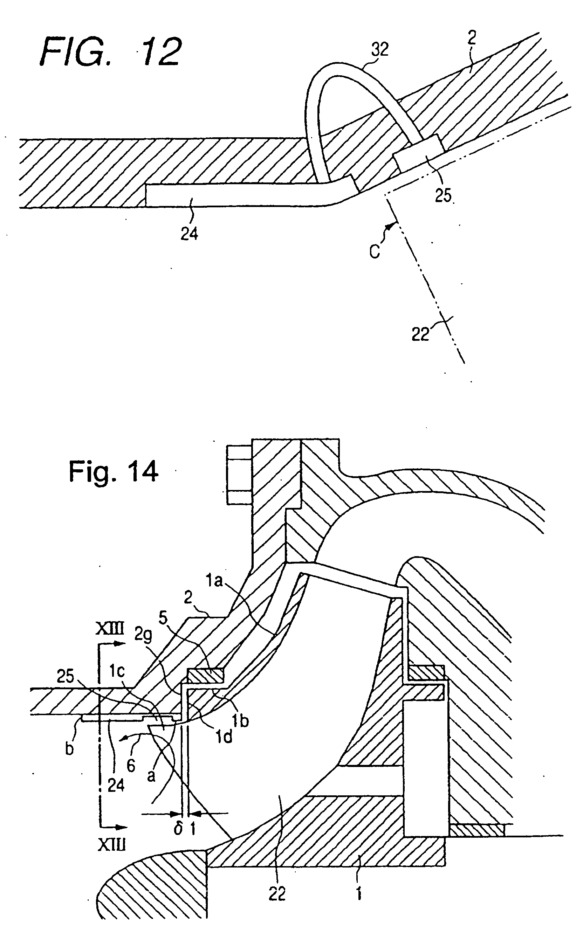

Next, a variation of the embodiment shown in Fig. 10 mentioned above will be shown in Fig. 12. An aspect differing from that shown in Figs. 10 (a) and (b) lies in that the flow passage 32 bypassing the inner flow surface of the casing is constructed with a conduit or a tube. By this the fluid compressed by the impeller blades flows back through the second grooves 25 and the flow passages 32 to the first grooves 24 against the main flow, thereby being spouted out in the position where the recirculation occurs.

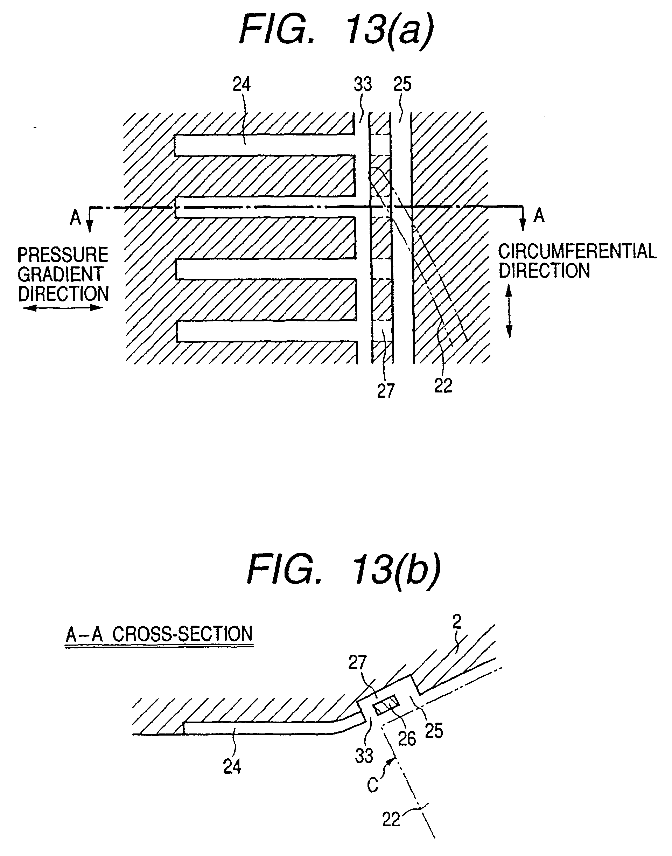

Another variation of the embodiment shown in Fig. 10 mentioned above will be shown in Figs. 13 (a) and (b). Fig. 13 (a) shows an extended view of the inner flow surface of the casing, and Fig. 13 (b) an A-A cross-section view in Fig. 13 (a).

An aspect of this variation differing from that shown in Figs. 10 (a) and (b) lies in that on the inner flow surface of the casing at the front edge c of the blades 22 is formed a third groove 33 in the circumferential direction thereof, for communicating the first grooves 24, which are formed in the axial direction in a large number thereof, into the circumferential direction thereof, separated from the second groove 25. The second groove 25 and the third groove 33 are communicated with each other through the flow passages 27, thereby being so constructed that the fluid compressed by the impeller blades 22 flows through the second grooves 25, the flow passages 27 and the third grooves 33 into the first grooves 24.

The fluctuation in pressure caused due to the interference when the blades 22 of the impeller pass by the first grooves 24 reduces the pressure difference between the plurality of first grooves 24 which are formed over the inner circumference of the casing, via the second grooves 25 and the third grooves 33, thereby enabling to suppress the increase of the vibration and noises caused due to the fluctuation in pressure within the turbo machine.

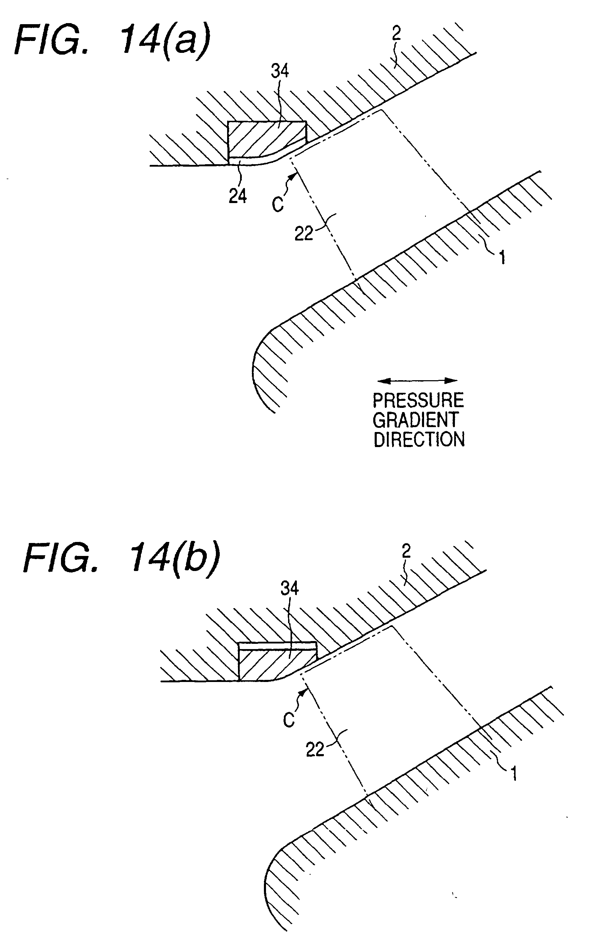

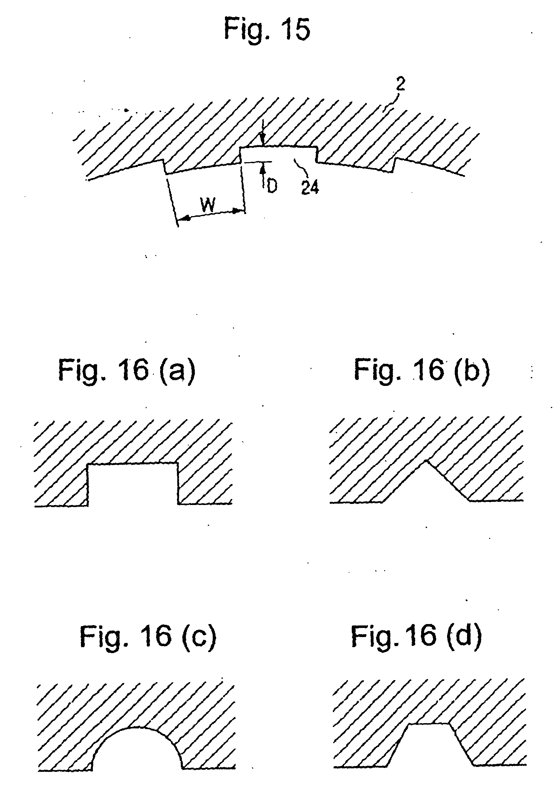

Fig. 14 shows an example, wherein the first embodiment according to the present invention is applied in a turbo machine (for example, a mixed-flow pump of closed-type) which uses a closed-type impeller having a shroud as a part thereof. Fig. 15 shows a cross-section view along with a XIII-XIII line in Fig. 14.

In the closed-type impeller 1, there is provided a shroud 1a. However, this shroud 1a is not provided in the vicinity 1c of the inlet of the impeller blades, but the impeller is in a form of so-called impeller of semi-open type, having a portion where no shroud is provided thereon. In the most inner diametric portion of the shroud, there is provided a mouse ring portion 1b, and on the inner flow surface of the casing 2 at the stationary side opposing to this is provided a casing ring 5. Between those mouse ring portion 1b and the casing ring 5 is constructed a sealing portion of an rotating axis. On the inner circumference of the inner flow surface of the casing 2 opposing the impeller blades having no shroud around it in the vicinity 1c of the inlet of the impeller blades, as it is shown in Figs. 14 and 15, a plurality of the first grooves 24 running in the axial direction are aligned around the circumference of the casing at an equal distance therebetween. A terminal position a of the grooves at the down-stream side of the turbo machine extends from the front edge of the impeller blades to a position entering a little bit into the down-stream side (i.e., the position neighboring or adjacent the mouse ring portion 1b in the vicinity of the inlet of the impeller blades), while a terminal position b at the upper-stream side of the turbo machine is located in the side being upper than the front edge of the blades of the impeller. A portion 2g of the casing 2 opposing the end surface 1d of the shroud of the impeller is constructed so as to be at a position being almost same to the terminal position a of the grooves 24 at the down-stream side in the axial direction, and to be upon a surface in a direction being orthogonal to the axis thereof. This surface (i.e., the portion) 2g and the end surface 1d of the shroud are opposing each other at a distance δ1 in the axial direction. A reference numeral 25 indicates the second groove formed in the circumferential direction in the vicinity of the area of the first grooves 24 in the axial direction where the impeller blades are arranged, and this groove 25 communicates with the first grooves which are formed over the inner circumference of the casing, and is formed as a groove being shallower than the first grooves.

When the turbo machine (i.e., the pump) is operated in a region of low flow rate, the recirculation (i.e., reverse flow) will occur as shown in Fig. 14. With such a structure mentioned above, according to the present embodiment, a portion of the fluid compressed by the impeller flows back from the terminal position a at the down-stream side up to the terminal position b at the upper-stream side within the first grooves. Since the grooves 24 are formed in a direction of the axis of the pump, the fluid flowing inside the grooves has no component in a direction of rotation of the impeller, and is spouted into the position where the recirculation occurs when the flow rate is low, thereby weakening or distinguishing the recirculation, and as the result of this, the generation of recirculation can be suppressed. Accordingly, it is possible to prevent from or suppress the generations of a swirl or pre-whirl which is caused at the inlet side of the impeller due to the recirculation, as well as the stall of rotation of the impeller blades. Then the decrease of a theoretical head becomes small, thereby improving the characteristic of uprising at the right-hand side of the head-flow rate characteristic curve in the turbo machine.

Also, the fluctuation in pressure due to the interference which is caused when the blades 22 pass by the grooves 24 in the axial direction can be reduced or mitigated by the existence of the second grooves 25, and the pressure difference between the grooves 24 can be also reduced or mitigated thereby. Therefore it is possible to suppress a phenomenon that the turbo machine is vibrated by the fluctuation in pressure leading to an increase in vibration and noises.

Although the explanation was given on the closed-type mixed-flow pump in the embodiments mentioned above, the present invention also can be applied to other turbo machines, such as a centrifugal pump, a mixed-flow air blower, a mixed-flow compressor, etc., each having the open-type impeller or the closed-type impeller.

Also, the shape or form of the cross-section of the grooves 24 running in axial direction (i.e., the pressure gradient direction of fluid) and formed on the inner flow surface of the casing may be made like a triangle, round, or trapezoidal, as shown in Figs. 16 (a) to (d), rather than rectangular. The grooves 25 and 33 may also be made in the same shape as in the cross-section thereof.

An operating flow rate by the pump of the pump station is determined at a point intersecting between a static head which is determined as a difference between the water heads or levels at the suction side and the discharge side in the pump station, a resistance curve which is determined by summing up resistance in the flow passage or pipes in the pump station, and the head-capacity characteristic curve of the pump. If there is a region uprising at the right-hand side in the head-capacity characteristic curve, there can be a case where the head-capacity characteristic curve intersects with the resistance curve at a plurality of points. In such an instance, it is impossible to determine the crossing point at only one point, i.e., the flow rate cannot be determined uniquely. Therefore the flow rate cannot be determined. In particular, this is remarkable when the stationary head is high and the pipe resistance is small.

In the conventional art, by bringing the maximum efficiency and the stability of the head into a balance so as to obtain the head-capacity characteristic curve without the behavior of uprising at the right-hand side, there may be a tendency that the maximum efficiency is decreased down a little bit. Also, in a case where there is an unstable region in the pump, the operation region of the pump must be in a region where no such the unstable operation occurs, thereby making the operation region narrow. Therefore, in a case where the operation enters into the unstable region for one unit of the pumps, such a measure must be taken that the pumps are increased up in the number thereof making the capacity for each of the pumps small, so as to shift the operation point of the each pump to a point outside the unstable region. Applying the present invention mentioned above, it is possible to eliminate the problems of those conventional arts. Further, according to the present invention, with the provision of the grooves on the periphery thereof, it is possible to reduce the generation of the fluctuation in pressure due to the interference between the grooves in the axial direction and the flow from the impeller, and thereby to reduce the vibration and noises in the main body of the pump, as well as in the conduits thereof which are caused by the vibration of the pump due to the fluctuation in pressure. Accordingly, with the present invention, there can be obtained an effect that the turbo machines have high performances without the characteristic of uprising at the right-hand side, and that the turbo machine obtained can also be applied even in a pump station, etc., neighboring a residential place.

The present invention can achieve a great effect when it is applied to a mixed-flow pump, and it can achieve a remarkable effect, in particular when being applied in a pump having a specific speed Ns as an index of indicating the characteristic of the pump, indicated in the following:

$$Ns = N \times Q^{0.5}/H^{0.75} \approx 1,000 \text{ to } 1,500$$

when assuming that a rotational speed is N (rpm), a total head is H (m), and a discharge flow rate Q (m³/min).

And a great effect can be obtained in particular when being applied into a pump, wherein a static head determined by a suction water level and a discharge water level is equal or greater than 50% of the head at a specific point.

According to the present invention, with the provision of the plurality of first grooves for communicating between the inlet side of the impeller and the area on the inner flow surface of the casing where the impeller is arranged, and of the plurality of second grooves for communicating those plural first grooves in the circumferential direction thereof, there can be obtained a turbo machine having a head-flow rate characteristic being improved in particular in the characteristic uprising at the right-hand side, and enabling to suppress the decrease in the efficiency thereof, as well as the increase in the vibration and noises therein.

Further, with the provision of the plural grooves in the pressure gradient direction of fluid, and the movable members being provided movable within a radial direction thereof so as to change the depth of the grooves, it is also possible to achieve the same or similar effect as mentioned above.

Further, according to the present invention, by applying the structure of the semi-open type, in which no shroud is formed in the vicinity of the inlet of the impeller, into a turbo machine having an impeller of closed type having the shroud therewith, there also can be obtain a turbo machine having the same or similar effect as mentioned in the above.

**Claims**

1. A turbo machine comprising
   a casing (2),
   an impeller (1) having a plurality of blades (22) and being positioned within said casing (2), and
   a plurality of first grooves (24) being formed on an inner flow surface of said casing (2) for communicating between an inlet side of said impeller (1) and an area of the inner flow surface of said casing (2) where the blades (22) of said impeller (1) are arranged, **characterized by**
   at least one second groove (25) being formed on the inner flow surface of said casing (2) for connecting said plurality of first grooves (24) in a circumferential direction of said casing (2).

2. A turbo machine as defined in the claim 1, wherein the width of said plurality of first grooves (24) is equal or greater than 5 mm, so that the total width of said plurality of the first grooves (24) amounts to about 30% - 50% with respect to the length of the inner circumference of the inner flow surface of said casing (2) where the blades (22) of said impeller (1) are arranged, and the depth of said plurality of first grooves (24) is equal or greater than 2 mm, so that it is about 0.5% - 1.6% with respect to a diameter of the inner flow surface of said casing (2) where the blades (22) of said impeller are arranged opposing the open portion.

3. A turbo machine as defined in the claim 1, wherein said second groove (25) is formed on the inner flow surface of said casing (2) where the blades (22) of said impeller (1) are arranged.

4. A turbo machine as defined in the claim 1, wherein the depth of said second grooves (25) is equal or less than the depth of said first grooves (24).

5. A turbo machine as defined in the claim 1, wherein said second groove (25) is deeper than said first grooves (24).

6. A turbo machine as defined in the claim 1, wherein a plurality of second grooves (24) is provided which intermittently direct in the circumferential direction of said casing (2).

7. A turbo machine as defined in the claim 1, wherein said second groove (25) extends on the inner flow surface of said casing (2) from a front edge position or a position in a vicinity of the blades (22) of said impeller (1) to the area where the blades (22) of said impeller (1) are arranged or to terminal ends of the first grooves (24).

8. A turbo machine as defined in the claim 1, wherein said second groove (25) extends on the inner flow surface of said casing (2) from the ends of said first grooves (24) at a down-stream side of said turbo machine to the area where the blades (22) of said impeller (1) are arranged or to the inlet side of said impeller (1).

9. A turbo machine as defined in the claim 1, wherein said second groove (25) has a spiral shape on the inner surface of said casing (2) from the inlet side of said impeller (1) up to the end said first grooves (24) at a down-stream side of said turbo machine.

10. A turbo machine as defined in the claim 1, wherein portions (28, 29) of said casing (2), where said first and second grooves (24, 25) are provided, are formed as a body being separated from another portion (30) of said casing (2).

11. A turbo machine as defined in the claim 1, wherein said first grooves (24) are formed so that they are inclined to the direction of rotation of said impeller (1) from a position in the vicinity of the inlet portion of the impeller (1) to a down-stream side of said turbo machine.

12. A turbo machine as defined in the claim 1, wherein a flow passage (27, 32) is provided for connecting said first grooves (24) and said second groove (25).

13. A turbo machine as defined in the claim 12, wherein said flow passage (27, 32) comprises at least one of a groove, a bore, a conduit and a tube, which bypasses the inner surface of said casing (2).

14. A turbo machine as defined in the claim 1, further comprising
a third groove (33) being formed on the inner surface of said casing (2) in the vicinity of the front edge of the blades (22) of said impeller (1) and directing in the circumferential direction thereof; and
a flow passage (27) for connecting said second groove (25) and said third groove (33), wherein said flow passage (27) is in alignment with said first groove (24) and bypasses the inner surface of said casing (2), so that it is in communication with said first groove (24) through said third groove (33).

15. A turbo machine as defined in the claim 1, wherein the impeller (1) comprises, except at an open portion in the vicinity of the inlet thereof, a shroud (1a) surrounding the blades (22), the second groove (25) opposing the open portion.

**Patentansprüche**

1. Turbomaschine mit
einem Gehäuse (2),
einem Laufrad (1), das mehrere Schaufeln (22) aufweist und innerhalb des Gehäuses (2) angeordnet ist, und
einer Vielzahl von ersten Nuten (24) die an einer inneren Strömungsfläche für eine Verbindung zwischen einer Einlassseite des Laufrads (1) und einem Bereich der inneren Strömungsfläche des Gehäuses (2) ausgebildet sind, an dem die Schaufeln (22) des Laufrads (1) angeordnet sind, **gekennzeichnet durch**
wenigstens eine zweite Nut (25), die an der inneren Strömungsfläche des Gehäuses (2) für eine Verbindung der Vielzahl von ersten Nuten (24) in Umfangsrichtung des Gehäuses (2) ausgebildet ist.

2. Turbomaschine nach Anspruch 1, bei der die Breite der Vielzahl von ersten Nuten (24) gleich oder größer als 5 mm ist, so dass die Gesamtbreite der Vielzahl der ersten Nuten (24) ungefähr 30% bis 50% bezüglich der Länge des Innenumfangs der inneren Strömungsfläche des Gehäuses (2) im Bereich der Anordnung der Schaufeln (22) des Laufrads (1) beträgt, und die Tiefe der Vielzahl von ersten Nuten (24) dort, wo die Schaufeln (22) des Laufrads (1) angeordnet sind, gleich oder größer als 2 mm ist, so dass sie ungefähr 0,5 bis 1,6% bezüglich eines Durchmessers der inneren Strömungsfläche des Gehäuses (2) im Bereich der Anordnung der Schaufeln (22) des Laufrads (1) beträgt.

3. Turbomaschine nach Anspruch 1, bei der die zweite Nut (25) an der inneren Strömungsfläche des Gehäuses (2) im Bereich der Anordnung der Schaufeln (22) des Laufrads (1) ausgebildet ist.

4. Turbomaschine nach Anspruch 1, bei der die Tiefe der zweiten Nuten (25) gleich oder kleiner als die Tiefe der ersten Nuten (24) ist.

5. Turbomaschine nach Anspruch 1, bei der die zweite Nut (25) tiefer ist als die ersten Nuten (24).

6. Turbomaschine nach Anspruch 1, bei der eine Vielzahl von zweiten Nuten (24) vorgesehen ist, die intermittierend in Umfangsrichtung des Gehäuses (2) ausgerichtet sind.

7. Turbomaschine nach Anspruch 1, bei der die zweite Nut (25) sich an der inneren Strömungsfläche des Gehäuses (2) von einer Vorderkantenposition oder einer Position in einer Nähe der Schaufeln (22) des Laufrades (1) zu dem Bereich, an dem die Schaufeln (22) des Laufrads (1) angeordnet sind oder zu den Enden der ersten Nuten (24) erstreckt.

8. Turbomaschine nach Anspruch 1, bei der die zweite Nut (25) sich an der inneren Strömungsfläche des Gehäuses (2) von den Enden der ersten Nuten (24) an einer stromabwärtigen Seite der Turbomaschine zu dem Bereich, an dem die Schaufeln (22) des Laufrads (1) angeordnet sind, oder zu der Einlassseite des Laufrades (1) erstreckt.

9. Turbomaschine nach Anspruch 1, bei der die zweite Nut (25) eine Spiralform an der inneren Fläche des Gehäuses (2) von der Einlassseite des Laufrades (1) bis zu dem Ende der ersten Nuten (24) an einer stromabwärtigen Seite der Turbomaschine aufweist.

10. Turbomaschine nach Anspruch 1, bei der Abschnitte (28, 29) des Gehäuses (2), an denen die ersten und zweiten Nuten (24, 25) vorgesehen sind, als ein Körper ausgebildet sind, der von einem anderen Abschnitt (30) des Gehäuses (2) getrennt ist.

11. Turbomaschine nach Anspruch 1, bei der die ersten Nuten (24) so ausgebildet sind, dass sie zur Drehrichtung des Laufrads (1) von einer Position in der Nähe des Einlassabschnitts des Laufrads (1) zu einer stromabwärtigen Seite der Turbomaschine geneigt sind.

12. Turbomaschine nach Anspruch 1, bei der ein Strömungskanal (27, 32) zur Verbindung der ersten Nuten (24) und der zweiten Nut (25) vorgesehen ist.

13. Turbomaschine nach Anspruch 12, bei der der Strömungskanal (27, 32) eine Nut, eine Bohrung, einen Kanal und/oder ein Rohr umfasst, die, der bzw. das die Innenfläche des Gehäuses (2) umgeht.

14. Turbomaschine nach Anspruch 1, die außerdem umfasst
eine dritte Nut (33), die an der inneren Fläche des Gehäuses (2) in der Nähe der Vorderkante der Schaufeln (22) des Laufrads (1) ausgebildet ist und in seiner Umfangsrichtung gerichtet ist, und
einen Strömungskanal (27) zur Verbindung der zweiten Nut (25) und dritten Nut (33), wobei der Strömungskanal (27) mit der ersten Nut (24) fluchtet und die innere Fläche des Gehäuses (2) umgeht, so dass er in Verbindung mit der ersten Nut (24) über die dritte Nut (33) steht.

15. Turbomaschine nach Anspruch 1, bei der das Laufrad (1) außer an einem offenen Abschnitt in der Nähe seines Einlasses eine Deckplatte (1a) umfasst, die die Schaufeln (22) umgibt, wobei die zweite Nut (25) dem offenen Abschnitt gegenüberliegt.

## Revendications

1. Turbomachine, comportant :

   un carter (2),
   une hélice (1) ayant une pluralité de pales (22) et positionnée dans ledit carter (2), et
   une pluralité de premières gorges (24) formées sur une surface d'écoulement intérieure dudit carter (2) pour une communication entre un côté d'entrée de ladite hélice (1) et une zone de la surface d'écoulement intérieure dudit carter (2) où sont agencées les pales (22) de ladite hélice (1), **caractérisée par**
   au moins une deuxième gorge (25) formée sur la surface d'écoulement intérieure dudit carter (2) pour connecter ladite pluralité de premières gorges (24) dans une direction circonférentielle dudit carter (2).

2. Turbomachine selon la revendication 1, dans laquelle la largeur de ladite pluralité de premières gorges (24) est égale ou supérieure à 5 mm, de sorte que la largeur de ladite pluralité des premières gorges (24) est d'environ 30 % à 50 % par rapport à la longueur de la circonférence intérieure de la surface d'écoulement intérieure dudit carter (2) où sont agencées les pales (22) de ladite hélice (1), et la profondeur de ladite pluralité de premières gorges (24) est égale ou supérieure à 2 mm, de sorte qu'elle est d'environ 0,5 % à 1,6 % par rapport à un diamètre de la surface d'écoulement intérieure dudit carter (2) où sont agencées les pales (22) de ladite hélice.

3. Turbomachine selon la revendication 1, dans laquelle ladite deuxième gorge (25) est formée sur la surface d'écoulement intérieure dudit carter (2) où sont agencées les pales (22) de ladite hélice (1).

4. Turbomachine selon la revendication 1, dans laquelle la profondeur desdites deuxièmes gorges (25) est égale ou inférieure à la profondeur desdites premières gorges (24).

5. Turbomachine selon la revendication 1, dans laquelle ladite deuxième gorge (25) est plus profonde que lesdites premières gorges (24).

6. Turbomachine selon la revendication 1, dans laquelle une pluralité de deuxièmes gorges (24) sont fournies, qui se dirigent par intermittence dans la direction circonférentielle dudit carter (2).

7. Turbomachine selon la revendication 1, dans laquelle ladite deuxième gorge (25) s'étend sur la surface d'écoulement intérieure dudit carter (2) à partir d'une position de bord avant ou d'une position à proximité des pales (22) de ladite hélice (1) vers la zone où sont agencées les pales (22) de ladite hélice, ou vers les extrémités terminales des premières gorges (24).

8. Turbomachine selon la revendication 1, dans laquelle ladite deuxième gorge (25) s'étend sur la surface d'écoulement intérieure dudit carter (2) à partir des extrémités desdites premières gorges (24) d'un côté aval de ladite turbomachine vers la zone où sont agencées les pales (22) de ladite hélice (1), ou vers le côté d'entrée de ladite hélice (1).

9. Turbomachine selon la revendication 1, dans laquelle ladite deuxième gorge (25) a une forme de spirale sur la surface intérieure dudit carter (2) à partir du côté d'entrée de ladite hélice (1) jusqu'à l'extrémité desdites premières gorges (24) d'un côté aval de ladite turbomachine.

**10.** Turbomachine selon la revendication 1, dans laquelle des parties (28, 29) dudit carter (2), où sont agencées lesdites premières et deuxième gorges (24, 25), sont formées sous la forme d'un corps séparé d'une autre partie (30) dudit carter (2).

**11.** Turbomachine selon la revendication 1, dans laquelle

lesdites premières gorges (24) sont formées de sorte qu'elles sont inclinées par rapport à la direction de rotation de ladite hélice (1) à partir d'une position située à proximité de la partie d'entrée de l'hélice (1) vers un côté aval de ladite turbomachine.

**12.** Turbomachine selon la revendication 1, dans laquelle

un passage d'écoulement (27, 32) est fourni pour connecter lesdites premières gorges (24) et ladite deuxième gorge (25).

**13.** Turbomachine selon la revendication 12, dans laquelle ledit passage d'écoulement (27, 32) comporte au moins un élément parmi une gorge, un alésage, un conduit et un tube, qui contourne la surface intérieure dudit carter (2).

**14.** Turbomachine selon la revendication 1, comportant de plus

une troisième gorge (33) formée sur la surface intérieure dudit carter (2) à proximité du bord avant des pales (22) de ladite hélice (1), et se dirigeant dans sa direction circonférentielle, et

un passage d'écoulement (27) pour connecter ladite deuxième gorge (25) et ladite troisième gorge (33), où ledit passage d'écoulement (27) est aligné avec ladite première gorge (24) et contourne la surface intérieure dudit carter (2) de sorte qu'il communique avec ladite première gorge (24) à travers ladite troisième gorge (33).

**15.** Turbomachine selon la revendication 1, dans laquelle

l'hélice (1) comporte, excepté au niveau d'une partie ouverte située à proximité d'une entrée de celle-ci, une protection (1a) entourant les pales (22), la deuxième gorge (25) étant opposée à la partie ouverte.

# FIG. 1

DOWN-
STREAM
SIDE

UPPER-
STREAM
SIDE

CIRCUMFERENTIAL
DIRECTION

PRESSURE
GRADIENT
DIRECTION

## FIG. 2

## FIG. 3

FIG. 4

FIG. 5

# FIG. 6

24    25

CIRCUMFERENTIAL
DIRECTION

PRESSURE
GRADIENT
DIRECTION

ROTATIONAL
DIRECTION

22

# FIG. 7

24    25

CIRCUMFERENTIAL
DIRECTION

PRESSURE
GRADIENT
DIRECTION

ROTATIONAL
DIRECTION

22

25

## FIG. 8

PRESSURE
GRADIENT
DIRECTION

CIRCUMFERENTIAL
DIRECTION

ROTATIONAL
DIRECTION

## FIG. 9

PRESSURE
GRADIENT
DIRECTION

CIRCUMFERENTIAL
DIRECTION

ROTATIONAL
DIRECTION

# FIG. 10(a)

PRESSURE GRADIENT DIRECTION

CIRCUMFERENTIAL DIRECTION

# FIG. 10(b)

A-A CROSS-SECTION

## FIG. 11(a)

PRESSURE GRADIENT DIRECTION

CIRCUMFERENTIAL DIRECTION

## FIG. 11(b)

A-A CROSS-SECTION

## FIG. 11(c)

B-B CROSS-SECTION

FIG. 12

Fig. 14

# FIG. 13(a)

24    33  25

PRESSURE
GRADIENT
DIRECTION

A → A

CIRCUMFERENTIAL
DIRECTION

27    22

# FIG. 13(b)

A–A CROSS-SECTION

2

27

24

33    26  25

C

22

FIG. 14(a)

PRESSURE
GRADIENT
DIRECTION

FIG. 14(b)

## Fig. 15

## Fig. 16 (a)

## Fig. 16 (b)

## Fig. 16 (c)

## Fig. 16 (d)